# EUROPÄISCHE PATENTSCHRIFT

(11) **EP 3 489 175 B1**
(45) Veröffentlichungstag und Bekanntmachung des Hinweises auf die Patenterteilung: **26.02.2020**
(21) Anmeldenummer: 17203501.6
(22) Anmeldetag: 24.11.2017
(51) Int. Cl.: B65G 54/02, B60L 13/03

(54) **TRANSPORTEINRICHTUNG IN FORM EINES LANGSTATORLINEARMOTORS MIT WENDEABSCHNITT**
TRANSPORT DEVICE IN THE FORM OF A LINEAR MOTOR WITH GUIDEWAY STATOR WITH TURNING SECTION
DISPOSITIF DE TRANSPORT SOUS FORME D'UN MOTEUR LINÉAIRE À STATOR LONG DOTÉ D'UNE SECTION DE RETOURNEMENT

(43) Veröffentlichungstag der Anmeldung: 29.05.2019
(73) Patentinhaber: B&R Industrial Automation GmbH, 5142 Eggelsberg (AT)
(72) Erfinder: Brucker, Michael, 4890 Weißenkirchen i.A. (AT); Huber, Stefan, 5020 Salzburg (AT)
(74) Vertreter: Patentanwälte Pinter & Weiss OG

(56) Entgegenhaltungen:
- EP-A1- 3 109 998
- EP-A1- 3 202 611
- EP-A1- 3 243 772
- DE-A1- 19 817 099
- JP-A- S6 399 701

## Beschreibung

Die Erfindung betrifft eine Transporteinrichtung in Form eines Langstatorlinearmotors mit einer Transportstrecke und zumindest einer Transporteinheit, die in Längsrichtung entlang der Transportstrecke bewegbar ist. Weiters betrifft die Erfindung ein Verfahren zum Wenden einer Transporteinheit einer Transporteinrichtung in Form eines Langstatorlinearmotors.

In so gut wie allen modernen Produktionsanlagen ist es erforderlich, Bauteile oder Komponenten, auch über längere Transportstrecken hinweg, mit Transporteinrichtungen zwischen einzelnen Handhabungs- oder Produktionsstationen zu bewegen. Dazu sind eine Vielzahl von Transport- oder Fördereinrichtungen bekannt. Häufig werden dazu Stetigförderer in verschiedenen Ausführungen eingesetzt. Konventionelle Stetigförderer sind Förderbänder in den verschiedenen Ausführungsformen, bei denen eine Drehbewegung eines elektrischen Antriebs in eine lineare Bewegung des Förderbandes umgesetzt wird. Mit solchen konventionellen Stetigförderern ist man in der Flexibilität erheblich eingeschränkt, insbesondere ist ein individueller Transport von einzelnen Transporteinheiten nicht möglich. Um dem abzuhelfen und um den Anforderungen moderner, flexibler Transporteinrichtungen gerecht zu werden, werden vermehrt sogenannte Langstatorlinearmotoren (LLM) als Ersatz für konventionelle Stetigförderer eingesetzt.

Bei einem Langstatorlinearmotor ist eine Vielzahl von elektrischen Antriebsspulen, die den Stator bilden, nebeneinander entlang einer Transportstrecke ortsfest angeordnet. Auf einer Transporteinheit ist eine Anzahl von Antriebsmagneten, entweder als Permanentmagnete oder als elektrische Spule oder Kurzschlusswicklung, angeordnet, die mit den Antriebsspulen zusammenwirken. Die (elektro)magnetischen Felder der Antriebsmagnete und der Antriebsspulen wirken zusammen, um eine Vortriebskraft auf die Transporteinheit, die die Transporteinheit vorwärtsbewegt, zu erzeugen. Der Langstatorlinearmotor kann als Synchronmaschine, sowohl selbsterregt oder fremderregt, oder als Asynchronmaschine ausgeführt sein. Durch Ansteuerung der einzelnen Antriebsspulen, zur Regelung des magnetischen Flusses, wird die Größe und Richtung der Vortriebskraft beeinflusst und die Transporteinheit kann in gewünschter Weise in gewünschter Richtung entlang der Transportstrecke bewegt werden. Dabei ist es auch möglich, entlang der Transportstrecke eine Vielzahl von Transporteinheiten anzuordnen, deren Bewegungen einzeln und unabhängig voneinander kontrolliert werden können, indem die jeweils mit einer Transporteinheit zusammenwirkenden Antriebsspulen bestromt werden, in der Regel durch Anlegen einer elektrischen Spannung.

Ein Langstatorlinearmotor zeichnet sich insbesondere durch eine bessere und flexiblere Ausnützung über den gesamten Arbeitsbereich der Bewegung (Position, Geschwindigkeit, Beschleunigung), eine individuelle Regelung/Steuerung der Transporteinheiten entlang der Transportstrecke, eine verbesserte Energieausnützung, die Reduktion der Wartungskosten aufgrund der geringeren Anzahl an Verschleißteilen, einen einfachen Austausch der Transporteinheiten, effizientes Monitoring und Fehlerdetektion und eine Optimierung des Produktstromes entlang der Transportstrecke aus. Beispiele solcher Langstatorlinearmotoren können der WO 2013/143783 A1, der US 6,876,107 B2, der US 2013/0074724 A1 oder der WO 2004/103792 A1 entnommen werden.

Oftmals ist der Langstator bzw. eine Transportstrecke auch in Form von einzelnen Streckenabschnitten aufgebaut, die wiederum aus zusammengefügten Transportsegmenten bestehen. Durch diese Modularität kann ein Langstatorlinearmotor einfacher aufgebaut werden, insbesondere wenn definierte Streckenabschnitte und Transportsegmente verwendet werden. Die konstruktive Ausgestaltung des Langstatorlinearmotors, also z.B. die Ausführung der Antriebsspulen, der Förderstrecke, der Transporteinheiten, der Führungen der Transporteinheit, usw., kann natürlich verschieden sein, wobei das grundlegende Funktionsprinzip eines Langstatorlinearmotors aber gleich bleibt.

In der Regel werden solche Transporteinrichtungen in Form eines Langstatorlinearmotors meist in einer Ebene angeordnet, sodass die Transporteinheiten entlang einer ebenen Transportstrecke bewegt werden. Die Transportstrecke kann dabei aus Transportsegmenten in Form von Kurvensegmenten, Geraden oder auch Weichen zusammengesetzt sein. Die Bewegung kann aber auch in mehreren Ebenen erfolgen, wie z.B. in der WO 2014/047104 A1 offenbart ist.

Die EP 3 109 998 A1 offenbart eine Transporteinrichtung und ein Verfahren nach den Oberbegriffen der Ansprüche 1 und 8, zur Übergabe einer Transporteinheit einer Transporteinrichtung in Form eines Langstatorlinearmotors in einer Weiche. Dabei wird beschrieben, wie die Ströme von Antriebsspulen geregelt werden müssen, um die Kräfteverhältnisse an einer Transporteinheit so zu beeinflussen, dass die Transporteinheit in der Weiche auf die gewünschte Seite bewegt wird. Nachteilig ist, dass man in der Flexibilität der Orientierung der Transporteinheit entlang der Transportstrecke begrenzt ist.

Die EP 3 22 611 A1 offenbart ein Verfahren zum Steuern der Bewegung einer Transporteinheit einer Transporteinrichtung in Form eines Langstatorlinearmotors. Dabei werden entlang einer Transportstrecke sogenannte logische Sektoren gebildet, die sich auch über mehrere Transportsegmente erstrecken können. Dadurch kann die Bewegung der Transporteinheit entlang der Transportstrecke unabhängig von der zugrundeliegenden Hardware geplant werden. Auch hier wird keine Orientierungsänderung einer Transporteinheit offenbart. Aufgrund z.B. eines vorgegebenen Produktionsprozesses kann es gewünscht sein, dass eine Transporteinheit z.B. in einer bestimmten Arbeitsstation eine definierte Orientierung aufweisen soll und in einer anderen, folgenden Arbeitsstation genau eine um 180° entgegengesetzte Orientierung (bezogen auf die Bewegungsrichtung der Transporteinheit) aufweisen soll. Beispielsweise kann dies erforderlich sein, wenn ein, mit der Transporteinheit transportiertes Produkt in einem ersten Arbeitsschritt auf einer ersten Seite bearbeitet wird und in einem zweiten Arbeitsschritt auf der gegenüberliegenden zweiten Seite bearbeitet wird. Auch kann aufgrund komplexer Streckenführungen nicht immer eine bestimmte Orientierung der Transporteinheit gewährleistet werden, weshalb es gewünscht sein kann, die Orientierung der Transporteinheit genau an einer bestimmten Stelle zu ändern.

Es ist daher die Aufgabe der Erfindung, eine Transporteinrichtung in Form eines Langstatorlinearmotors anzugeben, die eine Orientierungsänderung einer Transporteinheit in Längsrichtung ermöglicht sowie ein Verfahren zum Ändern der Orientierung einer Transporteinheit einer Transporteinrichtung in Form eines Langstatorlinearmotors.

Erfindungsgemäß wird die Aufgabe durch die Transporteinrichtung nach Anspruch 1 gelöst.

Vorzugsweise ist der Eingang des Wendeabschnitts als 90 Grad oder 180 Grad Streckenabschnitt ausgeführt und der Ausgang des Wendeabschnitts als 90 Grad oder 180 Grad Streckenabschnitt ausgeführt, wobei jeweils ein Ende des 90 Grad oder 180 Grad Streckenabschnitts mit dem ersten oder zweiten Transportstreckenabschnitt verbunden ist und das jeweils andere Ende ein offenes Ende aufweist.

Vorteilhafterweise sind ein 90 Grad oder 180 Grad Streckenabschnitt jeweils aus zwei Kurveneingangssegmenten mit jeweils einem geraden Endabschnitt und jeweils einem gekrümmten Endabschnitt und zumindest einem Kreisbogensegment, das die beiden Kurveneingangssegmente an den gekrümmten Abschnitten verbindet, aufgebaut und jeweils ein Kurveneingangssegment des 90 Grad oder 180 Grad Streckenabschnitts ist mit dem geraden Endabschnitt mit dem ersten oder zweiten Transportstreckenabschnitt verbunden und das jeweils zweite Kurveneingangssegment am geraden Endabschnitt ein offenes Ende aufweist.

Vorteilhafterweise sind der Eingang des Wendeabschnitts und der Ausgang des Wendeabschnitts verbunden und bilden eine erste geschlossene Transportstreckenschleife aus.

Wenn die Transportstrecke zumindest zwei Wendeabschnitte aufweist, kann die Orientierung der Transporteinheit zweimal um 180 Grad verändert werden, wodurch eine höhere Flexibilität der Transportstrecke erreicht wird, z.B. kann die Transporteinheit durch zweifaches Wenden wieder in die ursprüngliche Ausgangslage vor dem ersten Wendeabschnitt orientiert werden.

Gemäß einer weiteren vorteilhaften Ausgestaltung der Erfindung ist vorgesehen, dass die Transportstrecke im Bereich des Wendeabschnitts einen Übergangsabschnitt aufweist, der vorgesehen ist, die Transporteinheit ohne Wenden vom ersten Transportstreckenabschnitt zum zweiten Transportstreckenabschnitt zu bewegen, wobei der Übergangsabschnitt einen ersten Streckenabschnitt aufweist, der zumindest abschnittsweise einen gemeinsamen Bewegungspfad mit dem ersten Transportstreckenabschnitt aufweist und einen zweiten Streckenabschnitt aufweist, der zumindest abschnittsweise einen gemeinsamen Bewegungspfad mit dem zweiten Transportstreckenabschnitt aufweist, wobei die Transporteinheit in einer zweiten Übergabeposition vom ersten Transportstreckenabschnitt zum Übergangsabschnitt übergebbar ist, in Längsrichtung entlang des Übergangsabschnitt zum zweiten Transportstreckenabschnitt bewegbar ist und in einer dritten Übergabeposition vom Übergabeabschnitt zum zweiten Transportstreckenabschnitt übergebbar ist.

Vorzugsweise bildet der Übergangsabschnitt eine zweite offene oder geschlossene Transportstreckenschleife aus, entlang der die Transporteinheit in Längsrichtung bewegbar ist. Dadurch wird die Flexibilität der Transportstrecke weiter erhöht.

Die Aufgabe wird weiters mit einem Verfahren nach Anspruch 8 gelöst.

Die gegenständliche Erfindung wird nachfolgend unter Bezugnahme auf die Figuren 1 bis 7 näher erläutert, die beispielhaft, schematisch und nicht einschränkend vorteilhafte Ausgestaltungen der Erfindung zeigen. Dabei zeigt
Fig.1 einen grundsätzlichen Aufbau einer Transporteinrichtung in Form eines Langstatorlinearmotors,
Fig.2 eine erfindungsgemäße Transporteinrichtung in Form eines Langstatorlinearmotors mit einer Transportstrecke mit einem Wendeabschnitt mit einer ersten geschlossenen Transportstreckenschleife,
Fig.3 eine Detailansicht eines Wendeabschnitts,
Fig.4 eine erfindungsgemäße Transporteinrichtung in Form eines Langstatorlinearmotors mit einer offenen Transportstrecke mit einem Wendeabschnitt,
Fig.5 eine Detailansicht eines Wendeabschnitts mit Übergangsabschnitt,
Fig.6 eine erfindungsgemäße Transporteinrichtung in Form eines Langstatorlinearmotors mit einer Transportstrecke mit einem Wendeabschnitt mit einer ersten geschlossenen Transportstreckenschleife und einem Übergangsabschnitt mit einer geschlossenen zweiten Transportstreckenschleife und
Fig.7 eine erfindungsgemäße Transporteinrichtung in Form eines Langstatorlinearmotors mit einer offenen Transportstrecke mit einem Wendeabschnitt mit Übergangsabschnitt.

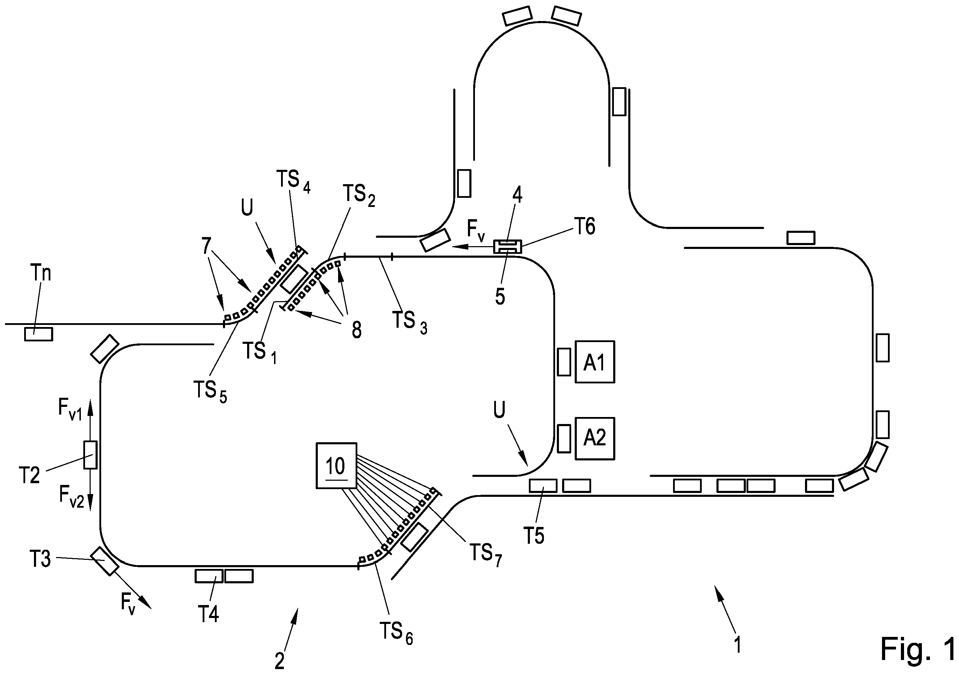

In Fig.1 ist eine Transporteinrichtung 1 in Form eines Langstatorlinearmotors beispielhaft dargestellt. Die Transporteinrichtung 1 besteht aus einer Anzahl von Transportsegmenten TSₖ (k≥1 ist hierbei ein Index, der für alle vorhandenen Transportsegmente TS₁, TS₂, TS₃, ... steht), von denen aus Gründen der Übersichtlichkeit beispielhaft nur die Transportsegmente TS₁ ... TS₇ bezeichnet sind. Ein Transportsegment TSₖ ist jeweils an einer Seite der Transportstrecke 2 angeordnet. Die Transportsegmente TSₖ bilden verschiedene Streckenabschnitte aus, beispielsweise eine Gerade, Kurven mit unterschiedlichen Winkeln und Radien, Weichen, usw., und können sehr flexibel zusammengesetzt werden, um die Transportstrecke 2 der Transporteinrichtung 1 auszubilden. Die Transportsegmente TSₖ zusammen bilden damit die ortsfeste Transportstrecke 2, entlang der die Transporteinheiten Tn (n≥1 ist hierbei ein Index, der für alle vorhandenen Transporteinheiten T1, T2, T3, T4, ... steht) bewegt werden können. Dieser modulare Aufbau ermöglicht eine sehr flexible Gestaltung der Transporteinrichtung 1. Die Transportsegmente TSₖ sind dabei natürlich an einer nicht dargestellten ortsfesten Stützkonstruktion angeordnet.

Die Transporteinrichtung 1 ist als Langstatorlinearmotor ausgeführt, bei denen die Transportsegmente TSₖ in an sich bekannter Weise jeweils einen Teil eines Langstators des Langstatorlinearmotors ausbilden. Entlang der Transportsegmente TSₖ sind daher in Längsrichtung in bekannter Weise eine Vielzahl von den Stator ausbildenden, ortsfest angeordnete elektrischen Antriebsspulen 7, 8 angeordnet (in Fig.1 aus Gründen der Übersichtlichkeit nur für die Transportsegmente TS₁, TS₂, TS₄, TS₅, TS₆, TS₇ angedeutet), die mit Antriebsmagneten 4, 5 an den Transporteinheiten T1 ... Tn (in Fig.1 aus Gründen der Übersichtlichkeit nur für die Transporteinheit T6 angedeutet) zur Erzeugung einer Vortriebskraft Fv zusammenwirken können. Die Antriebsspulen 7, 8 werden in hinlänglich bekannter Weise durch eine Regelungseinheit 10 angesteuert (in Fig.1 nur angedeutet), um die für die gewünschte Bewegung der Transporteinheiten Tn benötigten Spulenspannungen anzulegen.

Es kann entlang der Transportstrecke 2 auch Streckenabschnitte geben, an denen beidseitig Transportsegmente TSₖ angeordnet sind, zwischen denen eine Transporteinheit Tn bewegt wird (beispielsweise die Transportsegmente TS₁, TS₄). Wenn die Transporteinheit Tn an beiden Seiten (in Bewegungsrichtung gesehen) mit Antriebsmagneten 4, 5 ausgestattet ist, dann kann die Transporteinheit Tn auch gleichzeitig mit den beidseitig angeordneten Transportsegmenten TSₖ, bzw. mit dessen Antriebsspulen 7, 8, zusammenwirken. Damit kann natürlich in Summe auch eine größere Vortriebskraft F_{V} erzeugt werden. Je nachdem, in welche Bewegungsrichtung einer Transporteinheit Tn bewegt werden soll, können die Antriebsspulen 7, 8 von der Regelungseinheit 10 so angesteuert werden, dass entweder eine Vortriebskraft F_{V1} in eine erste Bewegungsrichtung oder eine Vortriebskraft F_{V2} in eine, um 180 Grad entgegengesetzte zweite Bewegungsrichtung erzeugt werden kann.

An der Transportstrecke 2 können auch eine Zahl von Arbeitsstationen Aj angeordnet sein, in denen die Transporteinheiten Tn z.B. angehalten werden, um einen bestimmten Bearbeitungsschritt an einer, mit der Transporteinheit beförderten Komponente durchzuführen. In Fig.1 sind beispielhaft zwei Arbeitsstationen A1, A2 dargestellt.

An der Transporteinheit Tn sind natürlich auch noch (hier aus Gründen der Übersichtlichkeit nicht dargestellte) Führungselemente, wie Rollen, Räder, Gleitflächen, Führungsmagnete, etc., vorgesehen, um die Transporteinheit Tn entlang der Transportstrecke 2 zu führen und zu halten, insbesondere auch im Stillstand. Die Führungselemente der Transporteinheit Tn wirken dabei zur Führung mit der Transportstrecke 2 oder den Transportsegmenten TSₖ zusammen, z.B. in dem sich die Führungselemente an der Transportstrecke abstützen, einhaken, daran abgleiten oder abrollen, etc.

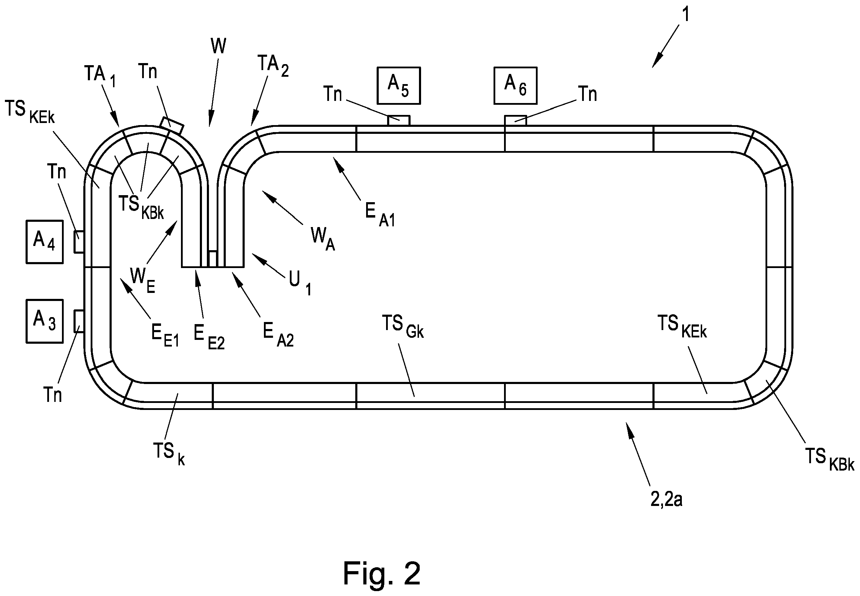

Um eine Orientierungsänderung der Transporteinheit 2 in Längsrichtung zu ermöglichen, ist erfindungsgemäß ein Wendeabschnitt W in der Transportstrecke 2 vorgesehen, wie nachfolgend anhand Fig.2 näher erläutert wird.

Fig.2 zeigt in bekannter Weise eine Transporteinrichtung 1 in Form eines Langstatorlinearmotors mit einer Transportstrecke 2, die aus einer Vielzahl von Transportsegmenten TSₖ zusammengesetzt ist und mehreren Transporteinheiten Tn, die entlang der Transportstrecke 2 bewegbar sind. Im dargestellten Beispiel besteht die Transportstrecke 2 z.B. aus drei verschiedenen Typen von Transportsegmenten TSₖ, geraden Transportsegmente TS_{Gk}, Kurveneingangssegmenten TS_{KEk} und Kreisbogensegmenten TS_{KBk}. Natürlich ist diese Auswahl nur bespielhaft und es könnten auch andere oder weitere Transportsegmente TSₖ verwendet werden, um eine Transportstrecke 2 auszubilden. An jedem Transportsegment TSₖ sind in bekannter Weise Antriebsspulen 7, 8 angeordnet und an jeder Transporteinheit Tn sind beidseitig Antriebsmagnete 4, 5 angeordnet, wie bereits anhand Fig. 1 erläutert wurde. Aus Gründen der Übersichtlichkeit sind diese in Fig.2 nicht dargestellt.

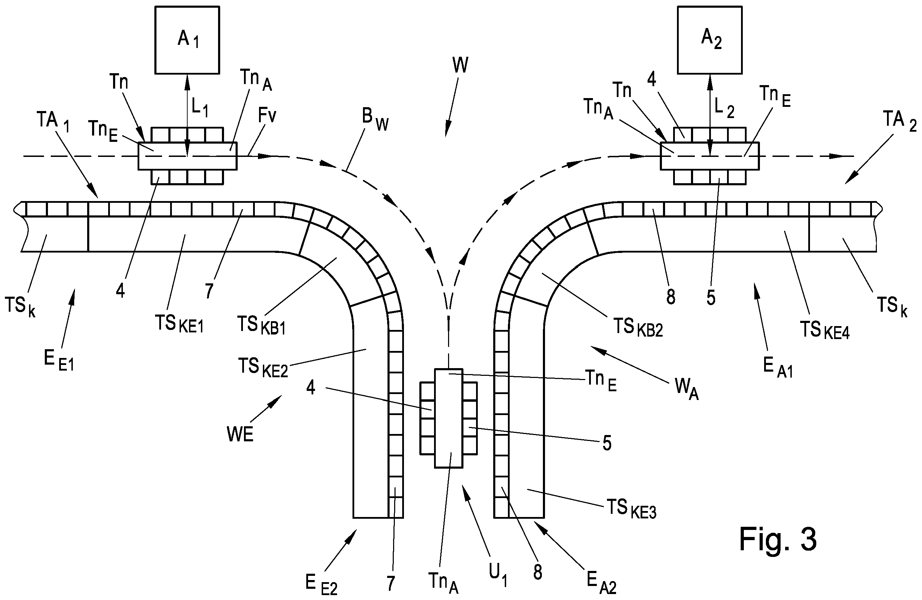

Erfindungsgemäß weist die Transportstrecke 2 einen Wendeabschnitt W auf, der vorgesehen ist, die Orientierung der Transporteinheit Tn auf der Transportstrecke 2 um 180 Grad in Längsrichtung zu ändern. Der Wendeabschnitt W weist einen Eingang W_{E} auf, der mit einem ersten Eingangsende E_{E1} mit einem ersten Transportstreckenabschnitt TA₁ verbunden ist und ein zweites offenes Eingangsende E_{E2} auf und weist einen Ausgang W_{A} auf, der mit einem ersten Ausgangsende E_{A1} mit einem zweiten Transportstreckenabschnitt TA₂ verbunden ist und ein zweites offenes Ausgangsende E_{A2} auf. "Offen" bedeutet im Sinne der Erfindung, dass eine Weiterbewegung der Transporteinheit Tn mit dem Langstatorlinearmotor über das offene Ende hinaus nicht möglich ist. Das offene Ende ist damit eine Art Kopfstation für die Transporteinheit Tn. Im dargestellten Beispiel ist der erste Transportstreckenabschnitt TA₁ mit dem zweiten Transportstreckenabschnitt TA₂ verbunden und bildet damit eine erste geschlossene Transportstreckenschleife 2a aus. Zum Wenden wird die Transporteinheit Tn zuerst in einer ersten Bewegungsrichtung vom ersten Transportstreckenabschnitt TA₁ zum Eingang W_{E} des Wendeabschnitts W bewegt, dann wird die Transporteinheit Tn vom Eingang W_{E} zum Ausgang W_{A} des Wendeabschnitts W übergeben und danach vom Ausgang W_{A} des Wendeabschnitts W in einer zweiten Bewegungsrichtung zum zweiten Transportstreckenabschnitt TA₂ bewegt. Natürlich kann das Wenden auch umgekehrt erfolgen. Das Wenden der Transporteinheit Tn ist in Fig.3 anhand einer vergrößerten Darstellung eines Wendeabschnitts W im Detail dargestellt.

Die Transporteinheit Tn weist an beiden Seiten Antriebsmagnete 4, 5 auf, die mit Antriebsspulen 7, 8 der Transportsegmente TSk zur Erzeugung einer Vortriebskraft F_{V} zusammenwirken. Die gestrichelte Linie symbolisiert den Bewegungspfad B_{W}, entlang dem die Transporteinheit Tn beim Wenden bewegt wird. Die Transporteinheit Tn wird mit einem ersten Transporteinheitsende Tn_{A} in Bewegungsrichtung (angedeutet durch die Pfeile am Bewegungspfad) und einem zweiten Transporteinheitsende Tn_{E} entgegen der Bewegungsrichtung von einem ersten Transportstreckenabschnitt TA₁ zum Eingang W_{E} des Wendeabschnitts W bewegt, indem die Antriebsmagnete 4 der Transporteinheit Tn mit den Antriebsspulen 7 der Transportsegmente TSk zusammenwirken. Im dargestellten Beispiel ist der Eingang W_{E} des Wendeabschnitts W als 90 Grad Streckenabschnitt ausgeführt, der aus zwei Kurveneingangssegmenten TS_{KE1}, TS_{KE2} und einem Kreisbogensegment TS_{KB1} besteht. Der Eingang W_{E} des Wendeabschnitts W könnte aber z.B. auch als 180 Grad Streckenabschnitt ausgeführt sein, wie in Fig. 2 dargestellt ist, oder beliebig anders ausgeführt sein.

Ein Streckenabschnitt muss auch nicht aus einzelnen Transportsegmenten TSₖ zusammengebaut sein, er könnte auch als einzelnes Transportsegment TSₖ ausgeführt sein, jedoch ist ein modularer Aufbau, wie dargestellt, mit standardisierten Transportsegmenten TSₖ vorteilhaft, weil damit mit wenigen verschiedenen Transportsegmenten TSₖ eine Transportstrecke 2 sehr flexibel gestaltet werden kann.

In der ersten Übergabeposition U₁ des Wendeabschnitts W wird die Transporteinheit Tn vom Eingang W_{E} an den Ausgang W_{A} des Wendeabschnitts W übergeben. Die Übergabeposition U₁ zeichnet sich dadurch aus, dass der Bewegungspfad des Eingangs W_{E} mit dem Bewegungspfad des Ausgangs W_{A} zusammenfällt. Das Zusammenfallen der Bewegungspfade muss in der praktischen Ausführung jedoch nicht ganz exakt sein, es ist auch ein geringes Spiel in Querrichtung zulässig. Durch das Zusammenfallen der Bewegungspfade muss aber jedenfalls eine Übergabe vom Eingang W_{E} zum Ausgang W_{A} möglich sein, wie nachfolgend beschrieben wird. "Übergabe" bedeutet in diesem Zusammenhang, dass die Transporteinheit Tn in der Übergabeposition U₁ mit Antriebsspulen des Eingangs W_{E} und/oder des Ausgangs W_{A} zusammenwirken kann, um die Transporteinheit Tn entlang dieser zu bewegen. Dazu wird die Bewegung der Transporteinheit Tn ab dem Zeitpunkt der Übergabe im Wesentlichen durch Zusammenwirken der Antriebsmagnete 5 der Transporteinheit Tn und der Antriebsspulen 8 des Ausgangs W_{A} des Wendeabschnitts W ermöglicht, im dargestellten Beispiel sind das die Antriebsspulen 8 des Kurveneingangssegments TS_{KE3}. Die Transporteinheit Tn wird dann mit einer, um 180 Grad geänderten Orientierung (bzw. Bewegungsrichtung), also mit dem zweiten Transporteinheitsende Tn_{E} in Bewegungsrichtung voran vom Ausgang W_{A} des Wendeabschnitts W entlang des Bewegungspfades B_{W} zum zweiten Transportstreckenabschnitt TA₂ bewegt, wie durch die Pfeile in Fig.3 symbolisiert ist. Das Wenden der Transporteinheit Tn um 180 Grad bezieht sich immer auf die Bewegungsrichtung der Transporteinheit Tn in Längsrichtung eines Transportsegments TSk und nicht auf den Winkel zwischen dem ersten und zweiten Transportstreckenabschnitt TA₁, TA₂. Zwischen dem ersten und zweiten Transportstreckenabschnitt TA₁, TA₂ kann natürlich auch ein anderer Winkel vorgesehen sein, beispielsweise wenn der Eingang W_{E} des Wendeabschnitts W als 60 Grad Bogen ausgeführt ist, statt des in Fig.3 dargestellten 90 Grad Bogens.

Durch die erfindungsgemäße Orientierungsänderung der Transporteinheit Tn ist es beispielsweise möglich, ein mit der Transporteinheit Tn bewegtes Gut in Arbeitsstationen A₃, A₄ (siehe Fig.2) von einer ersten Seite zu manipulieren, z.B. der Seite der Transporteinheit Tn, an der die Antriebsmagnete 5 angeordnet sind, und nach dem Wenden der Transporteinheit Tn im Wendeabschnitt W das Gut von einer gegenüberliegenden zweiten Seite, z.B. der Seite der Transporteinheit Tn, an der die Antriebsmagnete 4 angeordnet sind, in Arbeitsstationen A₅, A₆ zu manipulieren, oder umgekehrt. Dazu ist es nicht notwendig, die Arbeitsstation in Querrichtung gesehen an unterschiedlichen Seiten der Transportstrecke 2 anzuordnen, was nicht immer möglich ist.

Vorzugsweise sind der Eingang W_{E} und der Ausgang W_{A} des Wendeabschnitts W in Form von 90 Grad Streckenabschnitten, wie in Fig.3 dargestellt, oder als 180 Grad Streckenabschnitte, wie in Fig.2 anhand des Eingangs W_{E} dargestellt, ausgeführt. Besonders vorteilhaft ist es, wenn der 90 Grad Streckenabschnitt wie anhand Fig.3 beschrieben, aus zwei Kurveneingangssegmenten TS_{KEk} und einem dazwischen liegenden Kreisbogensegment TS_{KBk} besteht und der 180 Grad Streckenabschnitt aus zwei Kurveneingangssegmenten TS_{KEk} und mehreren dazwischen liegenden Kreisbogensegmenten TS_{KBk} besteht, im dargestellten Beispiel in Fig.2 aus drei Kreisbogensegmenten TS_{KBk}. Mit dieser Konfiguration, zusammen mit einem geraden Transportsegment TS_{Gk} kann eine Transportstrecke 2 mit nur drei verschiedenen Transportsegmenten TSₖ sehr flexibel gestaltet werden.

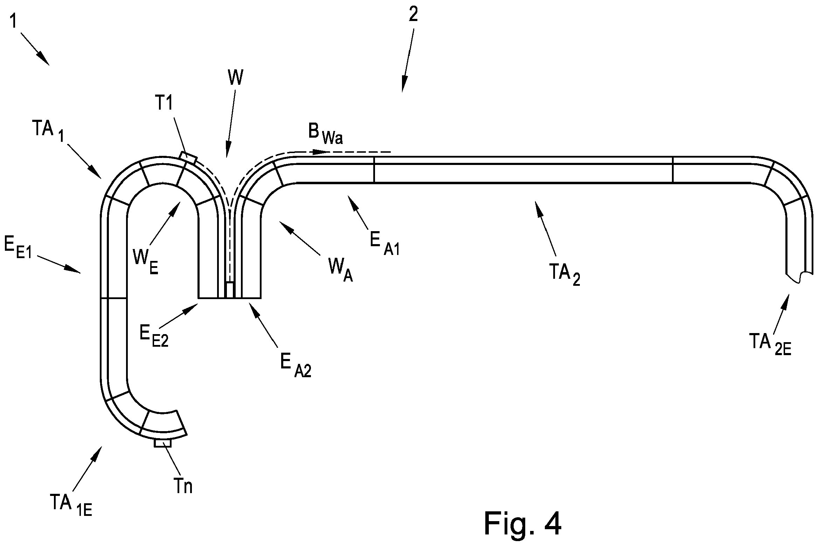

Der Wendeabschnitt W ist so gestaltet, dass das zweite Eingangsende E_{E2} des Eingangs W_{E} und das zweite Ausgangsende E_{A2} des Ausgangs W_{A},(das sind die jeweiligen Enden, die nicht an einen Transportstreckenabschnitt TA₁, TA₂ anschließen) als offene Enden ausgestaltet sind. Das offene Eingangsende E_{E2} und das offene Ausgangsende E_{A2} sind in Fig.2 dargestellt, wobei die Transporteinheit Tn zum Wenden wie beschrieben vom ersten Transportstreckenabschnitt TA₁ zum Eingang W_{E} des Wendeabschnitts W bewegbar ist, in der Übergabeposition U₁ vom Eingang W_{E} zum Ausgang W_{A} des Wendeabschnitts W übergebbar ist und vom Ausgang W_{A} zum zweiten Transportstreckenabschnitt TA₂ bewegbar ist. Vom zweiten Transportstreckenabschnitt TA₂ kann die Transporteinheit entlang der restlichen Transportstrecke 2, die gemäß Fig.2 als eine erste geschlossene Transportstreckenschleife 2a ausgestaltet ist, wieder zum ersten Transportstreckenabschnitt TA₁ bewegt werden. Die Transportstrecke 2 könnte aber natürlich auch offen ausgestaltet sein, wie in Fig.4 dargestellt ist.

Fig.4 zeigt eine offene Transportstrecke 2 mit einem Wendeabschnitt W, dereinen Eingang W_{E} und einen Ausgang W_{A} aufweist. Das erste Eingangsende E_{E1} des Eingangs W_{E} des Wendeabschnitts W ist mit dem ersten Transportstreckenabschnitt TA₁ verbunden und das erste Ausgangsende EA₁ des Ausgangs W_{A} des Wendeabschnitts W ist mit dem zweiten Transportstreckenabschnitt TA₂ verbunden. Der erste und zweite Transportstreckenabschnitt TA₁, TA₂ weisen jeweils ein offenes Ende TA_{1E}, TA_{2E} auf. Die Transporteinheit Tn kann entlang des Bewegungspfades B_{Wa} bewegt werden, wobei im Wendeabschnitt W erfindungsgemäß die Orientierung der Transporteinheit Tn um 180 Grad in Längsrichtung geändert wird. Natürlich kann die Bewegung entlang des beschriebenen Bewegungspfades B_{Wa} auch in umgekehrter Richtung erfolgen, also vom zweiten Transportstreckenabschnitt TA₂ zum ersten Transportstreckenabschnitt TA₁.

Erfindungsgemäß weisen der, an den Eingang W_{E} des Wendeabschnitts W angrenzende erste Transportstreckenabschnitt TA₁ und der, an den Ausgang W_{A} des Wendeabschnitts W angrenzende zweite Transportstreckenabschnitt TA₂ der Transportstrecke 2 zumindest abschnittsweise einen koaxialen Bewegungspfad B für die Transporteinheit Tn auf, wie in Fig.3 ersichtlich ist. Dadurch kann z.B. gewährleistet werden, dass Abstände L₁, L₂ zwischen der Transporteinheit Tn und Arbeitsstationen A₁, A₂ vor und nach dem Wendeabschnitt W im Wesentlichen gleich groß sind.

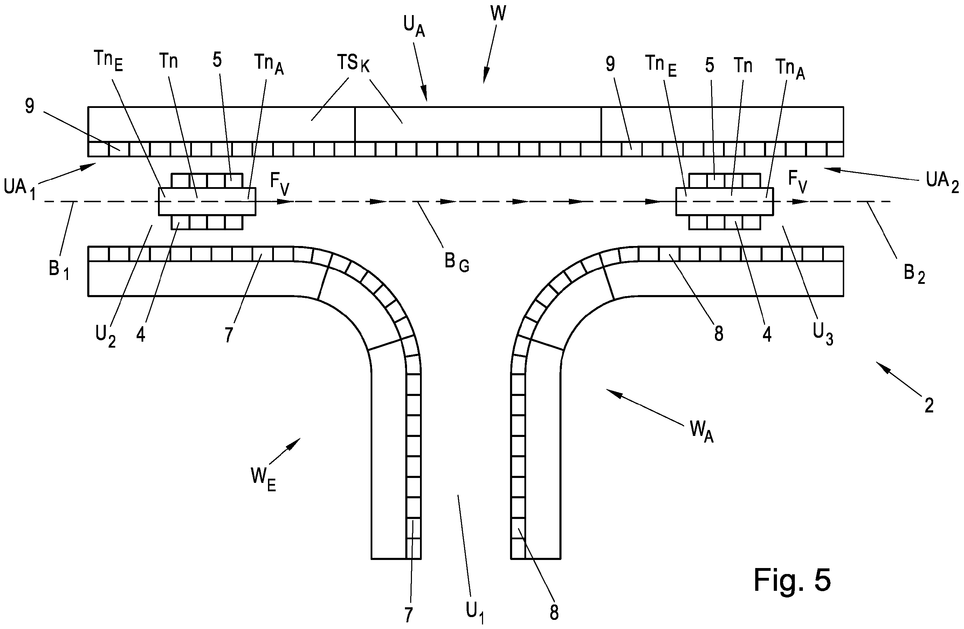

Eine weitere Ausgestaltung der Erfindung ist in Fig.5 dargestellt. Dabei weist die Transportstrecke 2 im Bereich des Wendeabschnitts W einen Übergangsabschnitt UA auf, der vorgesehen ist, die Transporteinheit Tn ohne Wenden vom ersten Transportstreckenabschnitt TA₁ zum zweiten Transportstreckenabschnitt TA₂ zu bewegen. Der Übergangsabschnitt UA weist einen ersten Übergangsstreckenabschnitt UA₁ auf, der zumindest abschnittsweise einen gemeinsamen Bewegungspfad B₁ mit dem ersten Transportstreckenabschnitt TA₁ aufweist und weist einen zweiten Übergangsstreckenabschnitt UA₂ auf, der zumindest abschnittsweise einen gemeinsamen Bewegungspfad B₂ mit dem zweiten Transportstreckenabschnitt TA₂ aufweist, wobei die Transporteinheit Tn in einer zweiten Übergabeposition U₂ vom ersten Transportstreckenabschnitt TA₁ zum ersten Übergangsstreckenabschnitt UA₁ übergebbar ist, in Längsrichtung entlang des Übergangsabschnitts UA zum zweiten Transportstreckenabschnitt TA₂ bewegbar ist und in einer dritten Übergabeposition U₃ vom zweiten Übergangsstreckenabschnitt UA₂ des Übergabeabschnitts UA zum zweiten Transportstreckenabschnitt TA₂ übergebbar ist. Der Wendeabschnitt W kann in dieser Ausgestaltung damit nicht nur zum Wenden der Transporteinheit Tn benützt werden, wie anhand Fig.3 ausführlich beschrieben wurde, sondern alternativ ohne Orientierungsänderung entlang des Übergangsabschnitts UA vom ersten Transportstreckenabschnitt TA₁ zum zweiten Transportstreckenabschnitt TA₂ bewegt werden, wie in Fig.5 durch den Bewegungspfad B_{G} für die Geradeausfahrt symbolisiert ist.

Der Übergangsabschnitt UA kann wie dargestellt aus mehreren Transportsegmenten TSₖ aufgebaut sein, könnte aber auch nur ein Transportsegment TSₖ aufweisen, das sich zumindest teilweise über beide Transportstreckenabschnitte TA₁, TA₂ erstreckt. Bei der Geradeausfahrt bleibt die Orientierung der Transporteinheit Tn in Längsrichtung unverändert, es zeigt also sowohl am ersten Transportstreckenabschnitt TA₁, als auch am zweiten Transportstreckenabschnitt TA₂ das erste Transporteinheitsende Tn_{A} der Transporteinheit Tn in Bewegungsrichtung und das zweite Transporteinheitsende Tn_{E} entgegen der Bewegungsrichtung. Wichtig ist, dass der Übergangsstreckenabschnitt UA₁ des Übergabeabschnitts UA und der erste Transportstreckenabschnitt TA₁ im Bereich der Übergabeposition U₂ einen gemeinsamen Bewegungspfad B₁ aufweisen, sodass eine Übergabe der Transporteinheit Tn vom ersten Transportstreckenabschnitt TA₁ auf den Übergangsabschnitt UA ermöglicht wird. Gleiches gilt natürlich auch für die dritte Übergabeposition U₃, in welcher der Übergangsstreckenabschnitt UA₂ des Übergangsabschnitts UA und der zweite Transportstreckenabschnitt TA₂ einen gemeinsamen Bewegungspfad B₂ aufweisen. Analog der ersten Übergabeposition U₁ ist auch in der zweiten und dritten Übergabeposition U₂, U₃ ein gewisses Spiel beim Zusammenfallen Bewegungspfade zulässig, solange eine sichere Übergabe der Transporteinheit Tn gewährleistet werden kann.

Bis zur Übergabe der Transporteinheit Tn in der zweiten Übergabeposition U₂ wird die Vortriebskraft F_{V} zur Bewegung der Transporteinheit Tn durch Zusammenwirken der Antriebsmagnete 4 der Transporteinheit Tn mit den Antriebsspulen 7 des ersten Transportstreckenabschnitts TA₁ erzeugt, in der zweiten Übergabeposition U₂ wird die Erzeugung der Vortriebskraft F_{V} von den Antriebsmagneten 5 in Zusammenspiel mit den Antriebsspulen 9 des Übergangsstreckenabschnitt UA₁ des Übergabeabschnitts UA übernommen. Die genaue Steuerung der Übergabe wird vorzugsweise von einer (nicht dargestellten) übergeordneten Regelungseinheit 10 durchgeführt (siehe Fig. 1). Die Übergabe muss aber natürlich nicht genau in einem Punkt erfolgen, sondern die zweite Übergabeposition U₂ kann auch ein Bereich sein, der sich in Längsrichtung über eine gewisse Distanz entlang des Bewegungspfades B₁ erstreckt, in welchem die Übergabe z.B. kontinuierlich während der Bewegung der Transporteinheit Tn erfolgt. Dazu erfolgt die Übergabe der Erzeugung der Vortriebskraft F_{V} vorzugsweise nicht sprunghaft, sondern gleichmäßig, indem die Vortriebskraft F_{V} im Bereich der zweiten Übergabeposition U₂ beispielsweise kurzzeitig parallel erzeugt wird, also sowohl durch Zusammenwirken der Antriebsmagnete 4 mit den Antriebsspulen 7, als auch durch Zusammenwirken der Antriebsmagnete 5 mit den Antriebsspulen 9. Die Übergabe in der ersten Übergabeposition U₁ (wenn ein Wenden der Transporteinheit Tn erfolgen soll) oder der dritten Übergabeposition U₃ kann natürlich in analoger Weise erfolgen. Wie die Übergabe im Detail funktioniert ist aber nicht Gegenstand der Erfindung und kann beispielsweise der EP 3 109 998 A1 entnommen werden.

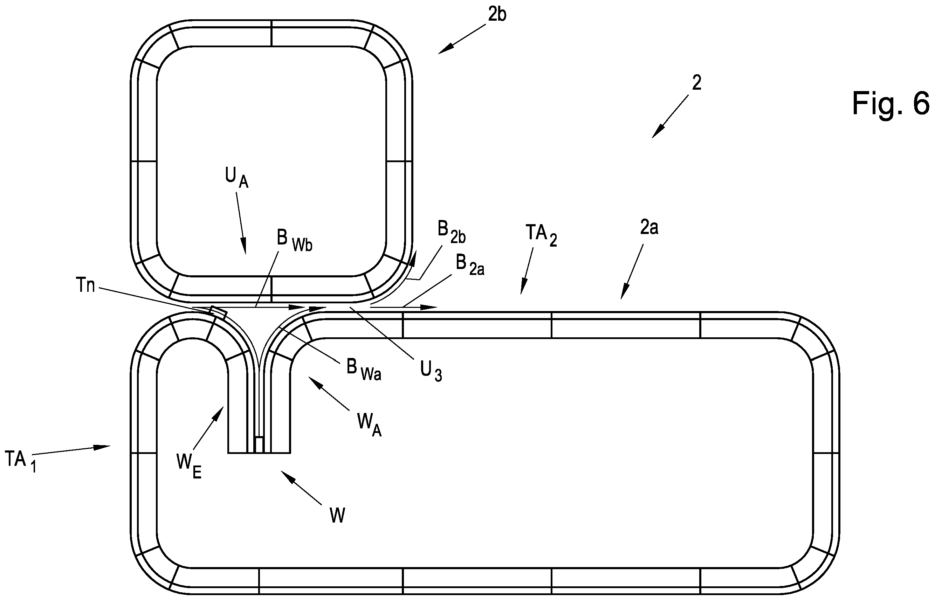

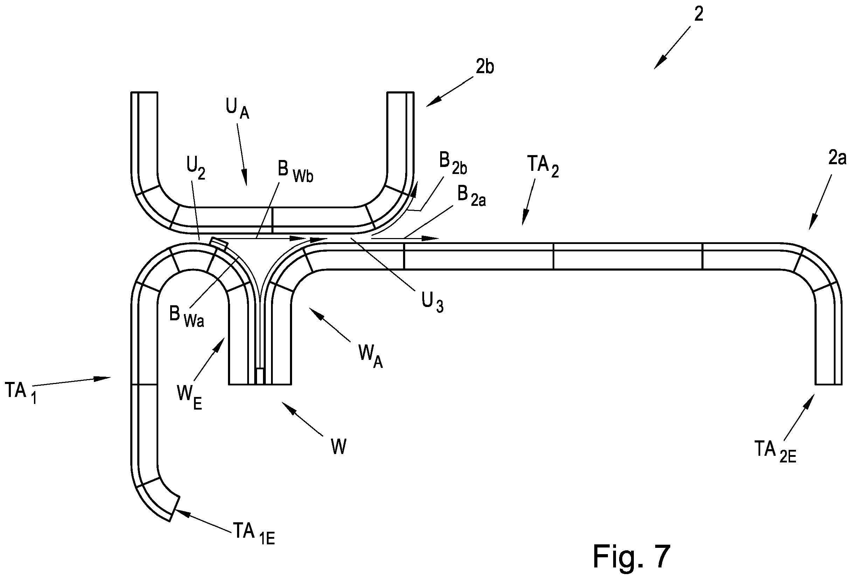

Gemäß einer weiteren Ausgestaltung der Erfindung kann der Übergangsabschnitt UA des Wendeabschnitts W eine zweite geschlossene Transportstreckenschleife 2b ausbilden, wie in Fig.6 dargestellt ist, oder eine zweite offene Transportstreckenschleife 2b ausbilden, wie in Fig.7 dargestellt ist, entlang der die Transporteinheit Tn in Längsrichtung bewegbar ist. Die Transportstrecke 2 in Fig.6 weist einen Wendeabschnitt W auf, wobei der erste Transportstreckenabschnitt TA₁ mit dem zweiten Transportstreckenabschnitt T_{A2} eine erste Transportstreckenschleife 2a ausbildet. Der Übergangsabschnitt UA des Wendeabschnitts W bildet seinerseits eine zweite geschlossene Transportstreckenschleife 2b aus. Die Transporteinheit Tn kann im Bereich des Wendeabschnitts W entlang zwei Bewegungspfaden B_{Wa}, B_{Wb} bewegt werden, wobei die Transporteinheit am Bewegungspfad B_{Wa} gewendet wird und am Bewegungspfad B_{Wb} nicht gewendet wird. Bei Bewegung entlang des Bewegungspfades B_{Wa} kann die Transporteinheit entweder weiter entlang der ersten geschlossenen Transportstreckenschleife 2a bewegt werden, wie durch den Bewegungspfad B₂ₐ symbolisiert ist, oder in der dritten Übergabeposition U₃ an die zweite geschlossene Transportstreckenschleife 2b übergeben werden und auf der zweiten geschlossenen Transportstreckenschleife 2b weiter bewegt werden, wie durch den Bewegungspfad B_{2b} symbolisiert ist.

Die Transportstrecke 2 gemäß Fig.7 ist offen ausgeführt und weist einen Wendeabschnitt W auf. Der erste Transportstreckenabschnitt TA₁ und der zweite Transportstreckenabschnitt TA₂ weisen jeweils ein offenes Ende TA_{1E}, TA_{2E} auf. Der Übergangsabschnitt UA des Wendeabschnitts W bildet seinerseits eine zweite offene Transportstreckenschleife 2b aus. Im dargestellten Beispiel ist der Eingang W_{E} des Wendeabschnitts W als 180 Grad Streckenabschnitt ausgeführt und der Ausgang W_{A} des Wendeabschnitts W ist als 90 Grad Streckenabschnitt ausgeführt. In dieser Konfiguration der Transportstrecke 2 kann die Transporteinheit Tn im Bereich des Wendeabschnitts W entlang der zwei bereits beschriebenen Bewegungspfade B_{Wa}, B_{Wb} bewegt werden, wobei die Transporteinheit am Bewegungspfad B_{Wa} gewendet wird und am Bewegungspfad B_{Wb} nicht gewendet wird.

Bei Bewegung entlang des Bewegungspfades B_{Wa} kann die Transporteinheit entweder weiter entlang der Transportstreckenschleife 2a bewegt werden, wie durch den Bewegungspfad B₂ₐ symbolisiert ist, oder in der dritten Übergabeposition U₃ an die zweite offene Transportstreckenschleife 2b übergeben werden und auf der Transportstreckenschleife 2b weiter bewegt werden, wie durch den Bewegungspfad B_{2b} symbolisiert ist. Es ist ersichtlich, dass mittels des erfindungsgemäßen Wendeabschnitts W eine sehr flexibel einsetzbare Transporteinrichtung 1 erreicht wird. Natürlich sind viele weitere Konfigurationen mit mehreren Wendeabschnitten W und Übergangsabschnitten UA denkbar.

## Patentansprüche

1. Transporteinrichtung (1) in Form eines Langstatorlinearmotors mit einer Transportstrecke (2) und zumindest einer Transporteinheit (Tn), die in Längsrichtung entlang der Transportstrecke (2) bewegbar ist, **dadurch gekennzeichnet, dass** die Transportstrecke (2) einen Wendeabschnitt (W) aufweist, der vorgesehen ist, die Orientierung der Transporteinheit (Tn) um 180 Grad in Längsrichtung entlang der Transportstrecke (2) zu ändern, wobei der Wendeabschnitt (W) einen Eingang (W_{E}) aufweist, der mit einem ersten Eingangsende (E_{E1}) mit einem ersten Transportstreckenabschnitt (TA₁) verbunden ist und ein zweites offenes Eingangsende (E_{E2}) aufweist, und einen Ausgang (W_{A}) aufweist, der mit einem ersten Ausgangsende (E_{A1}) mit einem zweiten Transportstreckenabschnitt (TA₂) verbunden ist und ein zweites offenes Ausgangsende (E_{A2}) aufweist, wobei der Eingang (W_{E}) und der Ausgang (W_{A}) des Wendeabschnitts (W) im Bereich einer ersten Übergabeposition (U₁) zumindest abschnittsweise einen gemeinsamen Bewegungspfad (B) ausbilden, entlang dem die Transporteinheit (Tn) bewegbar ist **und dass** die Transporteinheit (Tn) zum Wenden vom ersten Transportstreckenabschnitt (TA₁) zum Eingang (W_{E}) des Wendeabschnitts (W) bewegbar ist, in der ersten Übergabeposition (U₁) vom Eingang (W_{E}) zum Ausgang (W_{A}) des Wendeabschnitts (W) übergebbar ist und vom Ausgang (W_{A}) des Wendeabschnitts (W) zum zweiten Transportstreckenabschnitt (TA₂) bewegbar ist, wobei der an den Eingang (W_{E}) des Wendeabschnitts (W) angrenzende erste Transportstreckenabschnitt (TA₁) und der an den Ausgang (W_{A}) des Wendeabschnitts (W) angrenzende zweite Transportstreckenabschnitt (TA₂) der Transportstrecke (2) zumindest abschnittsweise einen koaxialen Bewegungspfad (B) aufweisen, entlang dem die Transporteinheit (Tn) bewegbar ist.

2. Transporteinrichtung 1 nach Anspruch 1, **dadurch gekennzeichnet, dass** der Eingang (W_{E}) des Wendeabschnitts (W) als 90 Grad oder 180 Grad Streckenabschnitt ausgeführt ist und der Ausgang (W_{A}) des Wendeabschnitts (W) als 90 Grad oder 180 Grad Streckenabschnitt ausgeführt ist, wobei jeweils ein Ende des 90 Grad oder 180 Grad Streckenabschnitts mit dem ersten oder zweiten Transportstreckenabschnitt (TA₁, TA₂) verbunden ist und das jeweils andere Ende ein offenes Ende aufweist.

3. Transporteinrichtung 1 nach Anspruch 2, **dadurch gekennzeichnet, dass** ein 90 Grad oder 180 Grad Streckenabschnitt jeweils aus zwei Kurveneingangssegmenten (TS_{KEk}) mit jeweils einem geraden Endabschnitt und jeweils einem gekrümmten Endabschnitt und zumindest einem Kreisbogensegment (TS_{KBk}), das die beiden Kurveneingangssegmente (TS_{KEk}) an den gekrümmten Abschnitten verbindet, besteht und dass jeweils ein Kurveneingangssegment (TS_{KEk}) des 90 Grad oder 180 Grad Streckenabschnitts mit dem geraden Endabschnitt mit dem ersten oder zweiten Transportstreckenabschnitt (TA₁, TA₂) verbunden ist und das jeweils zweite Kurveneingangssegment (TS_{KEk}) am geraden Endabschnitt ein offenes Ende aufweist.

4. Transporteinrichtung (1) nach einem der Ansprüche 1 bis 3, **dadurch gekennzeichnet, dass** der Eingang (W_{E}) des Wendeabschnitts (W) und der Ausgang (W_{A}) des Wendeabschnitts (W) verbunden sind und eine erste geschlossene Transportstreckenschleife (2a) ausbilden.

5. Transporteinrichtung (1) nacheinem der Ansprüche 1 bis 4, **dadurch gekennzeichnet, dass** Transportstrecke (2) zumindest zwei Wendeabschnitte (W) aufweist.

6. Transporteinrichtung (1) nach einem der Ansprüche 1 bis 5, **dadurch gekennzeichnet, dass** die Transportstrecke (2) im Bereich des Wendeabschnitts (W) einen Übergangsabschnitt (UA) aufweist, der vorgesehen ist, die Transporteinheit (Tn) ohne Wenden vom ersten Transportstreckenabschnitt (TA₁) zum zweiten Transportstreckenabschnitt (TA₂) zu bewegen, wobei der Übergangsabschnitt (UA) einen ersten Streckenabschnitt (UA₁) aufweist, der zumindest abschnittsweise einen gemeinsamen Bewegungspfad (B₁) mit dem ersten Transportstreckenabschnitt (TA₁) aufweist und einen zweiten Streckenabschnitt (UA₂) aufweist, der zumindest abschnittsweise einen gemeinsamen Bewegungspfad (B₂) mit dem zweiten Transportstreckenabschnitt (TA₂) aufweist, wobei die Transporteinheit (Tn) in einer zweiten Übergabeposition (U₂) vom ersten Transportstreckenabschnitt (TA₁) zum Übergangsabschnitt (UA) übergebbar ist, in Längsrichtung entlang des Übergangsabschnitts (UA) zum zweiten Transportstreckenabschnitt (TA₂) bewegbar ist und in einer dritten Übergabeposition (U₃) vom Übergabeabschnitt (UA) zum zweiten Transportstreckenabschnitt (TA₂) übergebbar ist.

7. Transporteinrichtung 1 nach Anspruch 6, **dadurch gekennzeichnet, dass** der Übergangsabschnitt (UA) eine zweite offene oder geschlossene Transportstreckenschleife (2b) ausbildet, entlang der die Transporteinheit (Tn) in Längsrichtung bewegbar ist.

8. Verfahren zum Wenden einer Transporteinheit (Tn) einer Transporteinrichtung (1) in Form eines Langstatorlinearmotors mit einer Transportstrecke (2), wobei die Transporteinheit (Tn) in Längsrichtung entlang der Transportstrecke (2) bewegt wird, **dadurch gekennzeichnet, dass** an der Transportstrecke (2) ein Wendeabschnitt (W) zum Ändern einer Orientierung der Transporteinheit (Tn) um 180 Grad in Längsrichtung entlang der Transportstrecke (2) vorgesehen wird, wobei am Wendeabschnitt (W) ein Eingang (W_{E}) vorgesehen wird, der mit einem ersten Eingangsende (E_{E1}) mit einem ersten Transportstreckenabschnitt (TA₁) verbunden wird und an dem ein zweites offenes Eingangsende (E_{E2}) vorgesehen wird, **dass** am Wendeabschnitt (W) ein Ausgang (W_{A}) vorgesehen wird, der mit einem ersten Ausgangsende (E_{A1}) mit einem zweiten Transportstreckenabschnitt (TA₂) verbunden wird und an dem ein zweites offenes Ausgangsende (E_{A2}) vorgesehen wird, wobei der Eingang (W_{E}) und der Ausgang (W_{A}) des Wendeabschnitts (W) im Bereich einer ersten Übergabeposition (U₁) zumindest abschnittsweise einen gemeinsamen Bewegungspfad (B) ausbilden, entlang dem die Transporteinheit (Tn) bewegt wird **und dass** die Transporteinheit (Tn) zum Wenden mit einem ersten Transporteinheitsende (Tn_{A}) in Bewegungsrichtung und mit einem zweiten Transporteinheitsende (Tn_{E}) entgegen der Bewegungsrichtung vom ersten Transportstreckenabschnitt (TA₁) zum Eingang (W_{E}) des Wendeabschnitts (W) bewegt wird, in der ersten Übergabeposition (U₁) vom Eingang (W_{E}) zum Ausgang (W_{A}) des Wendeabschnitts (W) übergeben wird und mit dem zweiten Transporteinheitsende (Tn_{E}) in Bewegungsrichtung voran vom Ausgang (W_{A}) des Wendeabschnitts (W) entlang des Bewegungspfades (BW) zum zweiten Transportstreckenabschnitt (TA₂) bewegt wird.

9. Verfahren nach Anspruch 8, **dadurch gekennzeichnet, dass** als Eingang W_{E} des Wendeabschnitts (W) ein 90 Grad oder 180 Grad Streckenabschnitt vorgesehen wird und dass als Ausgang (W_{A}) des Wendeabschnitts(W) ein 90 Grad oder 180 Grad Streckenabschnitt vorgesehen wird, wobei jeweils ein Ende des 90 Grad oder 180 Grad Streckenabschnitts mit dem ersten oder zweiten Transportstreckenabschnitt (TA₁, TA₂) verbunden wird und am jeweils andere Ende ein offenes Ende vorgesehen wird.

10. Verfahren nach Anspruch 9, **dadurch gekennzeichnet, dass** der 90 Grad oder der 180 Grad Streckenabschnitt jeweils aus zwei Kurveneingangssegmenten (TS_{KEk}) mit jeweils einem geraden Endabschnitt und jeweils einem gekrümmten Endabschnitt und zumindest einem Kreisbogensegment (TS_{KBk}), das die beiden Kurveneingangssegmente (TS_{KEk}) an den gekrümmten Abschnitten verbindet, gebildet wird und dass jeweils ein Kurveneingangssegment (TS_{KEk}) des 90 Grad oder 180 Grad Streckenabschnitts mit dem geraden Endabschnitt mit dem ersten oder zweiten Transportstreckenabschnitt (TA₁, TA₂) verbunden wird und am geraden Endabschnitt des jeweils zweiten Kurveneingangssegments (TS_{KEk}) ein offenes Ende vorgesehen wird.

11. Verfahren nach einem der Ansprüche 8 bis 10, **dadurch gekennzeichnet, dass** für den an den Eingang (W_{E}) des Wendeabschnitts (W) angrenzenden ersten Transportstreckenabschnitt (TA₁) und den an den Ausgang (W_{A}) des Wendeabschnitts (W) angrenzenden zweiten Transportstreckenabschnitt (TA₂) der Transportstrecke (2) zumindest abschnittsweise ein koaxialer Bewegungspfad (B) vorgesehen wird, entlang dem die Transporteinheit (Tn) bewegt wird.

12. Verfahren nach einem der Ansprüche 8 bis 11, **dadurch gekennzeichnet, dass** der Eingang (W_{E}) des Wendeabschnitts (W) und der Ausgang (W_{A}) des Wendeabschnitts (W) zu einer ersten geschlossenen Transportstreckenschleife (2a) verbunden werden.

13. Verfahren nacheinem der Ansprüche 8 bis 12, **dadurch gekennzeichnet, dass** an der Transportstrecke (2) zumindest zwei Wendeabschnitte (W) vorgesehen werden.

14. Verfahren nach einem der Ansprüche 8 bis 13, **dadurch gekennzeichnet, dass** an der Transportstrecke (2) im Bereich des Wendeabschnitts (W) ein Übergangsabschnitt (UA)vorgesehen wird, an dem die Transporteinheit (Tn) ohne Wenden vom ersten Transportstreckenabschnitt (TA₁) zum zweiten Transportstreckenabschnitt (TA₂) bewegt wird, wobei am Übergangsabschnitt (UA) ein, zumindest abschnittsweise einen gemeinsamen Bewegungspfad (B₁) mit dem ersten Transportstreckenabschnitt (TA₁) aufweisender erster Streckenabschnitt (UA₁) vorgesehen wird und einen zweiter, zumindest abschnittsweise einen gemeinsamen Bewegungspfad (B₂) mit dem zweiten Transportstreckenabschnitt (TA₂) aufweisender zweiter Streckenabschnitt (UA₂) vorgesehen wird, wobei die Transporteinheit (Tn) in einer zweiten Übergabeposition (U₂) vom ersten Transportstreckenabschnitt (TA₁) zum Übergangsabschnitt (UA) übergeben wird, in Längsrichtung entlang des Übergangsabschnitts (UA) zum zweiten Transportstreckenabschnitt (TA₂) bewegt wird und in einer dritten Übergabeposition (U₃) vom Übergabeabschnitt (UA) zum zweiten Transportstreckenabschnitt (TA₂) übergeben wird.

15. Verfahren nach Anspruch 14, **dadurch gekennzeichnet, dass** als Übergangsabschnitt (UA) eine zweite offene oder geschlossene Transportstreckenschleife (2b) vorgesehen wird, entlang der die Transporteinheit (Tn) in Längsrichtung bewegt wird.

## Claims

1. Transport device (1) in the form of a long-stator linear motor, comprising a transport route (2) and at least one transport unit (Tn), which can be moved in the longitudinal direction along the transport route (2), **characterized in that** the transport route (2) has a turnaround portion (W), which is provided to change the orientation of the transport unit (Tn) by 180° in the longitudinal direction along the transport route (2), the turnaround portion (W) having an entrance (W_{E}), which is connected to a first transport route portion (TA₁) by a first entrance end (E_{E1}), and a second, open entrance end (E_{E2}), and having an exit (W_{A}), which is connected to a second transport route portion (TA₂) by a first exit end (E_{A1}), and a second, open exit end (E_{A2}), the entrance (W_{E}) and the exit (W_{A}) of the turnaround portion (W) forming a common movement path (B) at least in some portions in the region of a first transfer position (U₁), the transport unit (Tn) being movable along said path, **and in that,** in order to be turned around, the transport unit (Tn) can be moved from the first transport route portion (TA₁) to the entrance (W_{E}) of the turnaround portion (W), transferred from the entrance (W_{E}) to the exit (W_{A}) of the turnaround portion (W) at the first transfer position (U₁), and moved from the exit (W_{A}) of the turnaround portion (W) to the second transport route portion (TA₂), the first transport route portion (TA₁), which adjoins the entrance (W_{E}) of the turnaround portion (W), and the second transport route portion (TA₂) of the transport route (2), which adjoins the exit (W_{A}) of the turnaround portion (W), comprising a coaxial movement path (B) at least in some portions, the transport unit (Tn) being movable along said path.

2. Transport device (1) according to claim 1, **characterized in that** the entrance (W_{E}) of the turnaround portion (W) is designed as a 90° or 180° route portion and the exit (W_{A}) of the turnaround portion (W) is designed as a 90° or 180° route portion, one end of the 90° or 180° route portion being connected to the first or second transport route portion (TA₁, TA₂) and the other end having an open end.

3. Transport device (1) according to claim 2, **characterized in that** a 90° or 180° route portion each consists of two curve entrance segments (TS_{KEk}), each having one straight end portion and one curved end portion, and at least one circular arc segment (TS_{KBk}), which connects the two curve entrance segments (TS_{KEk}) at the curved portions, and **in that** one curve entrance segment (TS_{KEk}) of the 90° or 180° route portion is connected to the first or second transport route portion (TA₁, TA²) by the straight end portion and the second curve entrance segment (TS_{KEk}) has an open end at the straight end portion.

4. Transport device (1) according to any of claims 1 to 3, **characterized in that** the entrance (W_{E}) of the turnaround portion (W) and the exit (W_{A}) of the turnaround portion (W) are connected and form a first closed transport route loop (2a).

5. Transport device (1) according to any of claims 1 to 4, **characterized in that** the transport route (2) comprises at least two turnaround portions (W).

6. Transport device (1) according to any of claims 1 to 5, **characterized in that,** in the region of the turnaround portion (W), the transport route (2) comprises a transfer portion (UA), which is provided for moving the transport unit (Tn) from the first transport route portion (TA₁) to the second transport route portion (TA₂) without turning said transport unit (Tn) around, the transfer portion (UA) having a first route portion (UA₁) that has a common movement path (B₁) together with the first transport route portion (TA₁) at least in some portions, and having a second route portion (UA₂) that has a common movement path (B₂) together with the second transport route portion (TA₂) at least in some portions, the transport unit (Tn) being able to be transferred from the first transport route portion (TA₁) to the transfer portion (UA) at a second transfer position (U₂), moved in the longitudinal direction along the transfer portion (UA) to the second transport route portion (TA₂), and transferred from the transfer portion (UA) to the second transport route portion (TA₂) at a third transfer position (U₃).

7. Transport device (1) according to claim 6, **characterized in that** the transfer portion (UA) forms a second open or closed transport route loop (2b), along which the transport unit (Tn) can be moved.

8. Method for turning around a transport unit (Tn) of a transport device (1) in the form of a long-stator linear motor comprising a transport route (2), the transport unit (Tn) being moved in the longitudinal direction along the transport route (2), **characterized in that** a turnaround portion (W) for changing an orientation of the transport unit (Tn) by 180° in the longitudinal direction along the transport route (2) is provided on the transport route (2), an entrance (W_{E}) being provided at the turnaround portion (W), which entrance is connected to a first transport route portion (TA₁) by a first entrance end (E_{E1}) and on which a second open entrance end (E_{E2}) is provided, **in that** an exit (W_{A}) is provided at the turnaround portion (W), which exit is connected to a second transport route portion (TA₂) by a first exit end (E_{A1}) and on which a second open exit end (E_{A2}) is provided, the entrance (W_{E}) and the exit (W_{A}) of the turnaround portion (W) forming a common movement path (B) at least in some portions in the region of a first transfer position (U₁), the transport unit (Tn) being moved along said path, **and in that,** in order to be turned around, the transport unit (Tn) is moved from the first transport route portion (TA₁) to the entrance (W_{E}) of the turnaround portion (W) while having a first transport unit end (Tn_{A}) pointing in the movement direction and a second transport unit end (Tn_{E}) pointing counter to the movement direction, is transferred from the entrance (W_{E}) to the exit (W_{A}) of the turnaround portion (W) at the first transfer position (U₁), and is moved from the exit (W_{A}) of the turnaround portion (W) along the movement path (Bw) to the second transport route portion (TA₂) while having the second transport unit end (Tn_{E}) at the front in the movement direction.

9. Method according to claim 8, **characterized in that** a 90° or 180° route portion is provided as the entrance (W_{E}) of the turnaround portion (W) and a 90° or 180° route portion is provided as the exit (W_{A}) of the turnaround portion (W), one end of the 90° or 180° route portion being connected to the first or second transport route portion (TA₁, TA₂) and the other end having an open end.

10. Method according to claim 9, **characterized in that** the 90° or 180° route portion each consists of two curve entrance segments (TS_{KEk}), each having one straight end portion and one curved end portion, and at least one circular arc segment (TS_{KBk}), which connects the two curve entrance segments (TS_{KEk}) at the curved portions, and **in that** one curve entrance segment (TS_{KEk}) of the 90° or 180° route portion is connected to the first or second transport route portion (TA₁, TA₂) by the straight end portion and an open end is provided at the straight end portion of the second curve entrance segment (TS_{KEk}).

11. Method according to any of claims 8 to 10, **characterized in that** for the first transport route portion (TA₁), which adjoins the entrance (W_{E}) of the turnaround portion (W), and the second transport route portion (TA₂) of the transport route (2), which adjoins the exit (W_{A}) of the turnaround portion (W), a coaxial movement path (B) is provided at least in some portions, the transport unit (Tn) being moved along said path.

12. Method according to any of claims 8 to 11, **characterized in that** the entrance (W_{E}) of the turnaround portion (W) and the exit (W_{A}) of the turnaround portion (W) are connected to form a first closed transport route loop (2a).

13. Method according to any of claims 8 to 12, **characterized in that** at least two turnaround portions (W) are provided on the transport route (2).

14. Method according to any of claims 8 to 13, **characterized in that,** on the transport route (2) in the region of the turnaround portion (W), a transfer portion (UA) is provided, on which the transport unit (Tn) is moved from the first transport route portion (TA₁) to the second transport route portion (TA₂) without being turned around, a first route portion (UA₁), which has a common movement path (B₁) together with the first transport route portion (TA₁) at least in some portions, and a second route portion (UA₂), which has a common movement path (B₂) together with the second transport route portion (TA₂) at least in some portions, being provided on the transfer portion (UA), the transport unit (Tn) being transferred from the first transport route portion (TA₁) to the transfer portion (UA) at a second transfer position (U₂), moved in the longitudinal direction along the transfer portion (UA) to the second transport route portion (TA₂), and transferred from the transfer portion (UA) to the second transport route portion (TA₂) at a third transfer position (U₃).

15. Method according to claim 14, **characterized in that** a second open or closed transport route loop (2b) along which the transport unit (Tn) can be moved in the longitudinal direction is provided as the transfer portion (UA).

## Revendications

1. Dispositif de transport (1) sous forme d'un moteur linéaire à stator long comportant un chemin de transport (2) et au moins une unité de transport (Tn) mobile dans le sens longitudinal le long du chemin de transport (2), **caractérisé en ce que** le chemin de transport (2) comporte une section de retournement (W) qui est prévue pour modifier l'orientation de l'unité de transport (Tn) de 180 degrés dans le sens longitudinal le long du chemin de transport (2), la section de retournement (W) comportant une entrée (W_{E}) reliée à une première section de chemin de transport (TA₁) par une première extrémité d'entrée (E_{E1}) et comportant une seconde extrémité d'entrée ouverte (E_{E2}), et une sortie (W_{A}) reliée à une seconde section de chemin de transport (TA₂) par une première extrémité de sortie (E_{E1}) et comportant une seconde extrémité de sortie ouverte (E_{A2}), l'entrée (W_{E}) et la sortie (W_{A}) de la section de retournement (W) dans la zone d'une première position de transfert (U₁) formant, au moins par endroits, un trajet de déplacement commun (B), le long duquel l'unité de transport (Tn) peut être déplacée, **et en ce que** l'unité de transport (Tn) peut être déplacée pour le retournement de la première section de chemin de transport (TA₁) vers l'entrée (W_{E}) de la section de retournement (W), peut être transférée dans la première position de transfert (U₁) de l'entrée (W_{E}) vers la sortie (W_{A}) de la section de retournement (W), et peut être déplacée de la sortie (W_{A}) de la section de retournement (W) vers la seconde section de chemin de transport (TA₂), la première section de chemin de transport (TA₁) adjacente à l'entrée (W_{E}) de la section de retournement (W) et la seconde section de chemin de transport (TA₂) adjacente à la sortie (W_{A}) de la section de retournement (W) du chemin de transport (2) comportant, au moins par endroits, un trajet de déplacement coaxial (B), le long duquel l'unité de transport (Tn) peut se déplacer.

2. Dispositif de transport 1 selon la revendication 1, **caractérisé en ce que** l'entrée (W_{E}) de la section de retournement (W) est réalisée sous la forme d'une section de chemin de 90 ou de 180 degrés, et **en ce que** la sortie (W_{A}) de la section de retournement (W) est réalisée sous la forme d'une section de chemin de 90 ou de 180 degrés, chaque extrémité de la section de chemin de 90 ou de 180 degrés étant reliée à la première ou à la seconde section de chemin de transport (TA₁, TA₂) et chaque autre extrémité comportant une extrémité ouverte.

3. Dispositif de transport 1 selon la revendication 2, **caractérisé en ce qu'**une section de chemin de 90 ou de 180 degrés est constituée respectivement de deux segments d'entrée de virage (TS_{KEk}) comportant respectivement une section d'extrémité droite et une section d'extrémité incurvée, et au moins un segment d'arc de cercle (TS_{KBk}) reliant les deux segments d'entrée de virage (TS_{KEk}) aux sections incurvées, et **en ce que** chaque segment d'entrée de virage (TS_{KEk}) de la section de chemin de 90 ou de 180 degrés est relié à la première ou à la seconde section de chemin de transport (TA₁, TA₂) par l'intermédiaire de la section d'extrémité droite, et chaque second segment d'entrée de virage (TS_{KEk}) comporte une extrémité ouverte au niveau de la section d'extrémité droite.

4. Dispositif de transport (1) selon l'une des revendications 1 à 3, **caractérisé en ce que** l'entrée (W_{E}) de la section de retournement (W) et la sortie (W_{A}) de la section de retournement (W) sont reliées et forment une première boucle de chemin de transport (2a) fermée.

5. Dispositif de transport (1) selon l'une des revendications 1 à 4, **caractérisé en ce que** le chemin de transport (2) comporte au moins deux sections de retournement (W).

6. Dispositif de transport (1) selon l'une des revendications 1 à 5, **caractérisé en ce que** le chemin de transport (2) dans la zone de la section de retournement (W) comporte une section de transition (UA) prévue pour déplacer l'unité de transport (Tn) sans retournement de la première section de section de chemin de transport (TA₁) vers la seconde section de chemin de transport (TA₂), la section de transition (UA) comportant une première section de chemin (UA₁) comportant, au moins par endroits, un trajet de déplacement (B₁) commun avec la première section de chemin de transport (TA₁) et comportant une seconde section de chemin
(UA₂) comportant, au moins par endroits, un trajet de déplacement (B₂) commun avec la seconde section de chemin (TA₂), l'unité de transport (Tn) pouvant être transférée dans une deuxième position de transfert (U₂) de la première section de chemin de transport (TA₁) vers la section de transfert (UA), pouvant être déplacée dans le sens longitudinal le long de la section de transition (UA) vers la seconde section de chemin de transport (TA₂), et pouvant être transférée dans une troisième position de transfert (U₃) de la section de transfert (UA) vers la seconde section de chemin de transport (TA₂).

7. Dispositif de transport 1 selon la revendication 6, **caractérisé en ce que** la section de transition (UA) forme une seconde boucle de chemin de transport (2b) ouverte ou fermée, le long de laquelle l'unité de transport (Tn) peut être déplacée dans le sens longitudinal.

8. Procédé de retournement d'une unité de transport (Tn) d'un dispositif de transport (1) sous forme d'un moteur linéaire à stator long comportant un chemin de transport (2), l'unité de transport (Tn) étant déplacée dans le sens longitudinal le long du chemin de transport (2), **caractérisé en ce qu'**une section de retournement (W) est prévue au niveau du chemin de transport (2) pour modifier une orientation de l'unité de transport (Tn) de 180 degrés dans le sens longitudinal le long de la section de transport (2), une entrée (W_{E}) étant prévue au niveau de la section de retournement (W), laquelle entrée est reliée à une première section de chemin de transport (TA₁) par une première extrémité d'entrée (E_{E1}) et au niveau de laquelle une seconde extrémité d'entrée ouverte (E_{E2}) est prévue, **en ce qu'**une sortie (W_{A}) est prévue au niveau de la section de retournement (W), laquelle sortie est reliée à une seconde section de chemin de transport (TA₂) par une première extrémité de sortie (E_{E1}) et au niveau de laquelle une seconde extrémité de sortie ouverte (E_{A2}) est prévue, l'entrée (W_{E}) et la sortie (W_{A}) de la section de retournement (W) formant, au moins par endroits, dans la zone d'une première position de transfert (U₁), un trajet de déplacement (B) commun, le long duquel l'unité de transport (Tn) est déplacée, **et en ce que** l'unité de transport (Tn) est déplacée pour le retournement vers l'entrée (W_{E}) de la section de retournement (W) par une première extrémité d'unité de transport (Tn_{A}) dans le sens de déplacement et par une seconde extrémité d'unité de transport (Tn_{E}) dans le sens opposé au sens de déplacement de la première section de chemin de transport (TA₁), est transférée dans la première position de transfert (U₁) de l'entrée (W_{E}) vers la sortie (W_{A}) de la section de retournement (W), et est déplacé vers l'avant vers la seconde section de chemin de transport (TA₂) par la seconde extrémité d'unité de transport (Tn_{E}) dans le sens de déplacement de la sortie (W_{A}) de la section de retournement (W) le long du trajet (BW).

9. Procédé selon la revendication 8, **caractérisé en ce qu'**une section de chemin de 90 ou de 180 degrés est prévue comme entrée (W_{E}) de la section de retournement (W), et **en ce qu'**une section de chemin de 90 ou de 180 degrés est prévue comme sortie (W_{A}) de la section de retournement (W), chaque extrémité de la section de chemin de 90 ou de 180 degrés étant reliée à la première ou à la seconde section de chemin de transport (TA₁, TA₂) et une extrémité ouverte étant prévue à chaque autre extrémité.

10. Procédé selon la revendication 9, **caractérisé en ce que** la section de chemin de 90 ou de 180 degrés est constituée de deux segments d'entrée de virage (TS_{KEk}) comportant chacun une section d'extrémité droite et une section d'extrémité incurvée, et au moins un segment d'arc de cercle (TS_{KBk}) reliant les deux segments d'entrée de virage (TS_{KEk}) aux sections incurvées, **en ce que** chaque segment d'entrée de virage (TS_{KEk}) de la section de chemin de 90 ou de 180 degrés est relié à la première ou la seconde section de chemin de transport (TA₁, TA₂) par l'intermédiaire de la section d'extrémité droite, et **en ce qu'**une extrémité ouverte est prévue au niveau de la section d'extrémité droite de chaque second segment d'entrée de virage (TS_{KEk}).

11. Procédé selon l'une des revendications 8 à 10, **caractérisé en ce qu'**un trajet de déplacement coaxial (B), le long duquel l'unité de transport (Tn) est déplacée, est prévu au moins par endroits pour la première section de chemin de transport (TA₁) adjacente à l'entrée (W_{E}) de la section de retournement (W) et pour la seconde section de chemin de transport (TA₂) du chemin de transport (2) adjacente à la sortie (WA) de la section de retournement (W).

12. Procédé selon l'une des revendications 8 à 11, **caractérisé en ce que** l'entrée (W_{E}) de la section de retournement (W) et la sortie (W_{A}) de la section de retournement (W) sont reliées à une première boucle de chemin de transport (2a) fermée.

13. Procédé selon l'une des revendications 8 à 12, **caractérisé en ce qu'**au moins deux sections de retournement (W) sont prévues au niveau du chemin de transport (2).

14. Procédé selon l'une des revendications 8 à 13, **caractérisé en ce qu'**une section de transition (UA), au niveau de laquelle l'unité de transport (Tn) est déplacée sans retournement de la première section de chemin de transport (TA₁) vers la seconde section de chemin de transport (TA₂), est prévue au niveau du chemin de transport (2) dans la zone de la section de retournement (W), une première section de chemin (UA₁) comportant, au moins par endroits, au moins un trajet de déplacement (B₁) commun avec la première section de chemin de transport (TA₁), étant prévue au niveau de la section de transition (UA), et une seconde section de chemin (UA₂) comportant, au moins par endroits, un trajet de déplacement (B₂) commun avec la seconde section de chemin de transport (TA₂), étant prévue, l'unité de transport (Tn) dans une deuxième position de transfert (U₂) étant transférée de la première section de chemin de transport (TA₁) vers la section de transition (UA) dans le sens longitudinal le long de la section de transition (UA) vers la seconde section de chemin de transport (TA₂), et transférée dans une troisième position de transfert (U₃) de la section de transfert (UA) vers la seconde section de chemin de transport (TA₂).

15. Procédé selon la revendication 14, **caractérisé en ce qu'**une seconde boucle de chemin de transport (2b) ouverte ou fermée, le long de laquelle l'unité de transport (Tn) est déplacée dans le sens longitudinal, est prévue comme section de transition (UA).
